# EUROPÄISCHE PATENTSCHRIFT

(11) **EP 2 532 149 B1**
(45) Veröffentlichungstag und Bekanntmachung des Hinweises auf die Patenterteilung: **14.10.2015**
(21) Anmeldenummer: 11705474.2
(22) Anmeldetag: 31.01.2011
(51) Int. Cl.: H04M 3/487, H04M 3/493, H04M 3/42, H04M 1/725

(54) **VERFAHREN UND COMPUTERPROGRAMMPRODUKT ZUR AUTOMATISIERTEN KONFIGURIERBAREN AKUSTISCHEN WIEDERGABE UND BEARBEITUNG VON INTERNETSEITENINHALTEN**
METHOD AND COMPUTER PROGRAM PRODUCT FOR AUTOMATED CONFIGURABLE ACOUSTIC REPRODUCTION AND PROCESSING OF INTERNET SITE CONTENT
PROCÉDÉ ET PRODUIT PROGRAMME INFORMATIQUE POUR LA REPRODUCTION ACOUSTIQUE ET LE TRAITEMENT, CONFIGURABLES DE MANIÈRE AUTOMATISÉE, DE CONTENUS DE PAGES INTERNET

(30) Priorität: 03.02.2010 DE 102010001564
(43) Veröffentlichungstag der Anmeldung: 12.12.2012
(73) Patentinhaber: Bayar, Seher, 51063 Köln (DE)
(72) Erfinder: BAYAR, Muhsin, 51063 Köln (DE)
(74) Vertreter: Buchenau, Thomas
(86) Internationale Anmeldenummer: PCT/EP2011/051329
(87) Internationale Veröffentlichungsnummer: WO 2011/095457

(56) Entgegenhaltungen:
- US-A1- 2003 032 456

## Beschreibung

Die Erfindung betrifft ein Verfahren und ein Computerprogrammprodukt zur automatisierten konfigurierbaren akustischen Wiedergabe von Internetseiteninhalten, insbesondere über eine Telefonleitung.

Aus WO 98/35491 und DE 199 59 850 A1 ist es bekannt, den Inhalt von Internetseiten durch Anwahl einer Telefonnummer wiederzugeben. Weitere Anwendungen, welche die Verwendung von Telefonen mit Internetseiten verknüpfen, sind aus US 2003/032456, WO 2001 043 388 A3, EP 1 282 295 A2, DE 100 09 279 A1 und DE 10 2005 011 536 B3 bekannt.

Die in den vorstehend genannten Schriften beschriebenen Verfahren, die Telefonie und Internet miteinander verknüpfen, haben in der jüngeren Vergangenheit an Bedeutung verloren, da das Internet inzwischen praktisch überall über mobile Endgeräte (z.B. Smartphones) via GPRS, EDGE, UMTS und sonstige Übertragungsstandards verfügbar ist.

Der Erfindung liegt die Aufgabe zugrunde, ein Verfahren sowie ein Computerprogrammprodukt zur Verfügung zu stellen, welches eine neuartige Verknüpfung von Telefonie und Internet schafft und damit einen automatisierten und flexiblen akustischen telefonischen Zugang zum Internet ermöglicht.

Die Lösung der Aufgabe erfolgt erfingdungsgemäß mit den Merkmalen der Ansprüche 1, 8 bzw. 9.

Das erfindungsgemäße Verfahren zur automatisierten konfigurierbaren akustischen Wiedergabe von Internetseiteninhalten umfasst folgende Schritte:
a) Speicherung einer persönlichen Zieltelefonnummer zu einem Benutzer in einer mit dem Internet verbundenen PC-Anwendung,
b) Auswahl mindestens einer über eine URL verfügbare Zielinformation durch den Benutzer und Speicherung der URL und der Zielinformation zu der persönlichen Zieltelefonnummer in der Anwendung,
c) Anwahl der Zieltelefonnummer durch den Benutzer und anschließende akustische Wiedergabe der Zielinformation aus der Anwendung durch eine Wiedergabeeinheit,

Das erfindungsgemäße Verfahren zur automatisierten Eingabe von Internetseiteninhalten umfasst folgende Schritte:
a) Anwahl einer zu einem Applikationsserver (130) gehörenden Telefonnummer oder einer einem Benutzer zugeordneten Zieltelefonnummer,
b) Auswahl einer Internetseite, zu welcher eine Eingabe erfolgen soll, durch einen Benutzer,
c) Spracheingabe durch einen Benutzer,
d) automatisierte Umwandlung der Spracheingabe in Text durch eine Spracherkennungssoftware,
e) automatisierte Übertragung des Textes durch einen Applikationsserver über das Internet an einen Contentannehmer.

Das erfindungsgemäße Computerprogrammprodukt zur konfigurierbaren akustischen Wiedergabe von Internetseiteninhalten, insbesondere zum Ablauf auf einem mit dem Internet verbundenen PC, umfasst folgende Module:
a) ein Speichermodul zur Speicherung von mindestens einer einem Benutzer zugeordneten Zieltelefonnummer, mindestens einer der Zieltelefonnummer zugeordneten URL sowie einer der URL zugeordneten Zielinformation,
b) ein Eingabemodul, mittels welchem ein Benutzer eine oder mehrere URLs sowie den URLs zugeordnete Zielinformationen eingeben und im Speichermodul speichern kann,
c) eine Schnittstelle zum Internet, die es ermöglicht, zu einer Telefonnummer im Speichermodul abgelegte Zielinformationen von den dazugehörigen URLs abzurufen,
d) eine Schnittstelle zu einer Wiedergabeeinheit oder eine Wiedergabeeinheit, die es ermöglicht, über eine URL abrufbare Texte und/oder Text enthaltende Dateien akustisch wiederzugeben und
e) eine internetbasierte Schnittstelle zu einem Telefonanbieter oder eine Schnittstelle zu einem Telefonnetz, mittels welcher die Schnittstelle zu einer Wiedergabeeinheit oder die Wiedergabeeinheit gemäß Merkmal d) nach Anwahl der Zieltelefonnummer durch einen Benutzer automatisch derart aktivierbar ist, dass die Zielinformation akustisch an den Benutzer übermittelbar ist

Mit anderen Worten ausgedrückt, ermöglichen die erfindungsgemäßen Verfahren und das erfindungsgemäße Computerprogrammprodukt die Zuordnung einer oder mehrerer über das Internet zugänglicher Textquellen (Zielinformationen genannt) zu einer benutzerspezifischen Telefonnummer (Zieltelefonnummer genannt) durch einen Benutzer. Die Textquellen können anschließend nach Anwahl der benutzerspezifischen Telefonnummer (Zieltelefonnummer) in akustischer Form wiedergegeben werden. Zur Umwandlung der im Internet als Text wiedergegebenen Zielinformation in Sprache wird der wiederzugebende Text an eine Wiedergabeeinheit transferiert, welche den Text in Sprache umwandelt. Das erfindungsgemäße Verfahren und das erfindungsgemäße Computerprogrammprodukt haben gegenüber den aus dem Stand der Technik bekannten Verfahren zur akustischen Wiedergabe von Internetseiten den Vorteil, dass jeder Benutzer den akustisch wiederzugebenden Inhalt der Internetseiten individuell festlegen kann und dadurch nach einer entsprechenden Konfiguration dieser Informationen stets auf ihn zugeschnittene Informationen verhält. Es ist beispielsweise möglich, Beiträge in Internetforen, internetbasierten Chats oder Online-Magazinen zu verfolgen und sich per Telefon über etwaige Änderungen auf den Internetseiten zu informieren. Zwar können derartige Beiträge heutzutage auch über mobile Endgeräte, wie z.B. Smartphones, jederzeit abgerufen werden, wenn eine Telefonverbindung existiert. Ein derartiges Abrufen und Aufnehmen der Informationen ist jedoch aufwendiger, d.h. mit mehr Arbeitsschritten verbunden, wenn mehrere Internetquellen gleichzeitig beobachtet werden sollen. In diesem Fall muss nämlich jede Seite manuell aufgerufen und visuell aufgenommen werden. Im Gegensatz dazu ermöglicht es die Erfindung, durch einen einzigen Arbeitsschritt, nämlich die Anwahl einer Telefonnummer, sämtliche zu beobachtenden Internetinhalte akustisch aufzunehmen. Darüber hinaus hat eine akustische Wiedergabe der Internetinhalte den weiteren Vorteil, dass die Zielinformationen auch dann aufnehmbar sind, wenn die visuelle Informationsaufnahme nur schwer oder gar nicht möglich oder sogar gesetzlich verboten ist (z.B. während des Autofahrens, während sportlicher Betätigung etc.).

Das erfindungsgemäße Verfahren zur automatisierten Eingabe von Internetseiteninhalten hat den Vorteil, dass Menschen, die aktuell nicht über einen Computer verfügen oder nicht lesen können (z.B. Blinde, Sehgeschädigte oder Analphabeten), die Möglichkeit erhalten, aktiv Informationen ins Internet zu steflen. Sie können sich durch bloßes Anwählen einer Telefonnummer und mit Hilfe Ihrer Sprache am Internetgeschehen beteiligen.

Weitere Vorteile der Erfindung werden nachfolgend im Zusammenhang mit den Unteransprüchen erläutert.

In einer einfachen Ausführungsform werden die Zielinformationen nach dem Anruf einer Zieltelefonnummer mit Hilfe der PC-Anwendung aus dem Internet abgerufen, an die Wiedergabeeinheit übermittelt und von dieser in Sprache gewandelt wiedergegeben. In einer vorteilhaften Weiterbildung des erfindungsgemäßen Verfahrens werden die einer persönlichen Zieltelefonnummer zugeordneten Zielinformationen durch die PC-Anwendung zwischengespeichert und zu vordefinierten oder vom Benutzer definierbaren Zeitpunkten mit den über die URL abrufbaren Zielinformationen aktualisiert. Dadurch wird die Verfügbarkeit der Zielinformation und damit die Reaktionszeit des Systems auf eine Anwahl der Zieltelefonnummer verbessert. Beispielsweise kann vordefiniert sein, dass die durch die PC-Anwendung zwischengespeicherten Zielinformationen minütlich, 30-minütlich oder stündlich mit den über die URL abrufbaren Zielinformationen aktualisiert werden. Ebenfalls möglich ist es, dass der Benutzer Zeitpunkte definiert, zu welchen die durch die PC-Anwendung zwischengespeicherten Zielinformationen mit den über die URL abrufbaren Zielinformationen aktualisiert werden sollen. Ruft der Benutzer beispielsweise einmal täglich morgens zwischen 08:00 und 09:00 Uhr die Zielinformationen durch Anwahl der Zieltelefonnummer ab, könnte er beispielsweise definieren, dass die Aktualisierung täglich um 07:50 Uhr erfolgt.

Um die Verwendung einer benutzerspezifischen Zieltelefonnummer durch unbefugte Dritte zu vermeiden, kann der Benutzer in einer weiter bevorzugten Variante des erfindungsgemäßen Verfahrens zu seiner persönlichen Zieltelefonnummer ein Kennwort vergeben, welches durch die PC-Anwendung zu der Zieltelefonnummer gespeichert wird. Die akustische Wiedergabe der Zielinformation zu der entsprechenden Zieltelefonnummer kann dann erst nach der Eingabe des durch die PC-Anwendung zu der Zieltelefonnummer gespeicherten Kennworts durch den Benutzer erfolgen,

In einer weiteren praktischen Variante des erfindungsgemäßen Verfahrens wird zur Bestimmung von einer Zieltelefonnummer zugeordneten Zielinformationen eine grafische Benutzeroberfläche verwendet, mittels weicher nach Eingabe einer URL eine Struktur der über die URL abrufbaren Informationen angegeben wird oder die Struktur der über die URL abrufbaren Informationen analysiert und anschließend entweder in abstrakter Form oder grafisch gegliedert auswählbar dargestellt wird. Es sind folglich drei Varianten zu unterscheiden.

Gemäß einer ersten Variante wird nach Eingabe einer URL eine Struktur der über die URL abrufbaren Informationen angegeben. Die Struktur kann von dem Betreiber einer Internetseite, die für das erfindungsgemäße Verfahren bereits analysiert wurde, Strukturelemente vorgeben, aus weichen die entsprechende Internetseite besteht. Beispielsweise könnte ein Forenbetreiber anbieten, dass bei akustischer Wiedergabe der Seite nur Überschriften neu erstellter Foren aufgezählt werden und der Benutzer durch manuelle Telefoneingabe dann entscheiden kann, ob er zu einer neuen Überschrift weitere Informationen erhalten möchte. Zusätzlich oder alternativ könnte er anbieten, dass alle neuen Informationen in einem Forum vollständig wiedergegeben werden oder dass nur vollständige Artikel zu bestimmten Themen eines Forums vollständig wiedergegeben werden sollen. Um dem Benutzer die Auswahl der wiederzugebenden Informationen zu erleichtern, kann bei der vorstehend beschriebenen Variante die vorhandene Struktur in Worten beschrieben und dem Benutzer durch Anklicken, Markieren oder dergleichen die Möglichkeit gegeben werden, die wiederzugebenden Informationen präzise auszuwählen.

Gemäß einer zweiten Variante wird die Struktur der über die URL abrufbaren Informationen analysiert und anschließend in abstrakter Form auswählbar dargestellt. Bei dieser Variante hat der Betreiber einer Internetseite keine Struktur vorgegeben. In diesem Fall wird die Seite mit Hilfe einer PC-Anwendung automatisch auf deren bestehende Struktur analysiert. Die analysierte Struktur wird dann in abstrakter Form, z.B. als Hauptüberschriften, Überschriften und Artikel, wiedergegeben. Bei einer Online-Tageszeitung könnten beispielsweise Hauptüberschriften Politik, Wirtschaft, Sport etc. sein. Überschriften wären dann die jeweiligen Artikelüberschriften und Texte die entsprechenden Artikeltexte.

In einer dritten Variante wird die Struktur der über die URL abrufbaren Informationen analog zur zweiten Variante analysiert. Allerdings wird dann die analysierte Struktur grafisch gegliedert auswählbar dargestellt. Darunter ist zu verstehen, dass die Internetseite im Wesentlichen so wiedergegeben wird, wie sie in einem normalen Browser dargestellt wird. Die Seite wird jedoch nach der Analyse durch Auswahlelemente (z.B. Checkboxen) oder durch die Möglichkeit ergänzt, einzelne Teile der Internetseite als Auswahl zu markieren. Der Benutzer kann in diesem Fall durch Anwählen oder Markieren graphisch auswählen, welcher Teil der Internetseite akustisch wiedergegeben werden soll, wenn die Zieltelefonnummer angerufen wird.

Gemäß einer weiter bevorzugten Variante des erfindungsgemäßen Verfahrens werden die einer persönlichen Zieltelefonnummer zugeordneten Zielinformationen durch den Benutzer durch die Angabe weiterer, insbesondere zeitlich definierter Parameter präzisiert und diese Parameter ebenfalls zu der Zieltelefonnummer durch die PC-Anwendung gespeichert. Beispielsweise kann der Benutzer bei dieser Verfahrensvariante angeben, dass er nur die Zielinformationen hören möchte, welche er seit seinem letzten Anwählen der Zieltelefonnummer noch nicht gehört hat. Alternativ kann der Benutzer beispielsweise festlegen, dass nur die neuen Zielinformationen des aktuellen Tages oder eines festgelegten Zeitraumes wiedergegeben werden sollen, wenn er die Zieltelefonnummer anwählt.

In einer weiter bevorzugten Verfahrensvariante kann der Benutzer die Zielinformation betreffende Bedingungen definieren, deren Eintreten eine automatisch von der PC-Anwendung ausgelöste Übermittlung der Zielinformation oder einer Statusmeldung an den Benutzer auslöst. Für eine solche automatische Übermittlung ist die Anwahl der Zieltelefonnummer nicht erforderlich. Beispielsweise kann der Benutzer festlegen, dass wenn mindestens drei neue Foreneinträge in seinen beobachteten Foren hinzugekommen sind, er eine Statusmeldung erhält. Eine solche Statusmeldung könnte beispielsweise ein Anruf, eine SMS, eine E-Mail oder eine sonstige Nachricht sein. Diese Variante, bei welcher der Benutzer lediglich eine Statusmeldung erhält, könnte mit der Möglichkeit verknüpft werden, dass der Benutzer selbst eine Anwahl der Zieltelefonnummer initiiert, wenn er eine bestimmte Taste drückt. Diese Variante kann in Anlehnung an die bereits bekannten RSS-Feeds als "VRSS-Call-Back" bezeichnet werden, wobei "V" für voice steht.

Alternativ kann der Benutzer auch festlegen, dass er einen automatischen Anruf mit der sofortigen akustischen Wiedergabe der gewünschten Zielinformationen von der PC-Anwendung erhält, wenn eine bestimmte Zahl neuer Foreneinträge hinzugekommen oder ein anderes, vordefiniertes Ereignis eingetreten ist. In diesem Fall würde der Benutzer automatisch nach Eintreten eines selbst definierten Ereignisses mit der vollständigen Zielinformation versorgt. Diese Variante könnte in Anlehnung an die bereits existierenden RSS-Feeds als VRSS-Direct-Call bezeichnet werden.

Wenn die PC-Anwendung die Zielinformation in eine Audiodatei umwandeln und anschließend an den Benutzer übermitteln und/oder speichern kann, bietet das erfindungsgemäße Verfahren dem Benutzer weitere Flexibilität. Beispielsweise kann er dann eine generierte Audiodatei über das Internet aus dem seiner Zieltelefonnummer zugeordneten Account abrufen oder sich per E-Mail automatisch zuschicken lassen. So können Informationen auch im Vorfeld abgerufen und erst später angehört werden, wenn beispielsweise absehbar ist, dass zu einem späteren Zeitpunkt kein Telefonnetz zum Abrufen der Zielinformationen zur Verfügung steht.

Die vorstehend im Zusammenhang mit dem erfindungsgemäßen Verfahren erläuterte Variante ist analog zu einem erfindungsgemäßen Computerprogrammprodukt, bei welchem anstelle oder zusätzlich zu der Wiedergabeeinheit eine Wandlungseinheit vorgesehen ist, mittels welcher die Zielinformation in eine Audiodatei wandelbar ist. Die im Zusammenhang mit dem Verfahren erläuterten Vorteile der Erfindung gelten daher ebenfalls für das erfindungsgemäße Computerprogrammprodukt.

Weitere vorteilhafte Ausbildungen der Erfindung sind nachfolgend im Zusammenhang mit den Zeichnungen beschrieben. Es zeigen:
- Fig. 1: eine schematische Darstellung eines PCs zur Ausführung eines erfindungsgemäßen Computerprogrammprodukts in einer ersten Ausführungsform,
- Fig. 2: eine schematische Darstellung eines PCs zur Ausführung einer zweiten Ausführungsform eines erfindungsgemäßen Computerprogrammprodukts sowie
- Fig. 3: eine schematische Darstellung einer praktischen Umsetzung des erfindungsgemäßen Verfahrens einschließlich dazu eingesetzter Hard- und Software.

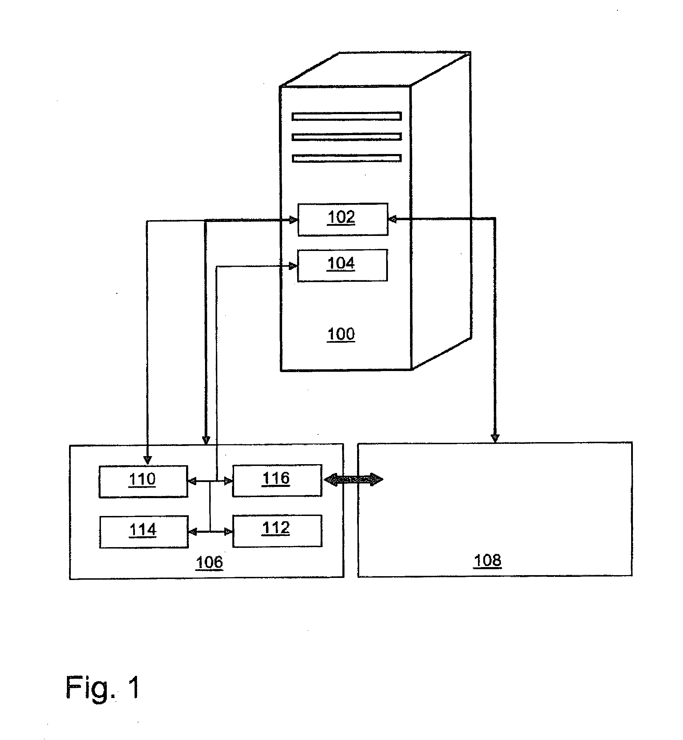

Figur 1 zeigt einen handelsüblichen Personalcomputer (PC) 100, welcher die bekannten Standardkomponenten Mainboard, Grafikkarte, Prozessor. Controller, Kühler, Netzteil etc. enthält (nicht dargestellt). Eine im PC eingebaute Festplatte 102 und eine Netzwerkkarte 104 sind in Figur 1 schematisch dargestellt.

Auf der Festplatte 102 ist eine PC-Anwendung 106 installiert, welche im Rahmen der vorliegenden Anwendung auch als Computerprogrammprodukt bezeichnet wird. Die PC-Anwendung 106 umfasst ein Speichermodul 110, ein Eingabemodul 112, eine Schnittstelle 114 zum Internet und eine Schnittstelle 116 zu einer Wiedergabeeinheit 108. Die Wiedergabeeinheit 108 kann - wie in Figur 1 dargestellt- eine selbständige PC-Anwendung sein, die mit der PC-Anwendung 106 verknüpft ist. Alternativ ist es möglich, die Wiedergabeeinheit 108 in die PC-Anwendung 106 zu implementieren. In diesem Fall ist eine Schnittstelle 116 zu einer externen Wiedergabeeinheit selbstverständlich nicht erforderlich.

Alle vorstehend genannten Elemente der PC-Anwendung 106 sind - wie in Figur 1 dargestellt - miteinander vernetzt und können Informationen untereinander austauschen. Alle Elemente haben außerdem Zugriff auf die Netzwerkkarte und sind über eine nicht dargestellte Internetverbindung mit dem Internet verbunden. Das Speichermodul 110 hat ferner Zugriff auf die Festplatte 102 und kann dort Informationen speichern und abrufen.

Über die Schnittstelle 116 steht die PC-Anwendung 106 mit einer Wiedergabeeinheit 108 in Verbindung. Bei der Wiedergabeeinheit 108 handelt es sich um eine externe Text-to-Speech-Software, die Text in Sprache umwandelt. Vorzugsweise wird hier eine Wiedergabeeinheit 108 verwendet, die nicht nur reinen Text in Sprache umwandeln kann, sondern auch dazu in der Lage ist, Text aus Bilddateien (z.B. PDF- oder GIF-Dokumenten) zu extrahieren und dann in Sprache umzuwandeln.

Wie bereits erwähnt, ist der PC über die Netzwerkkarte 104 mit dem Internet verbunden. Die in der PC-Anwendung 106 vorgesehene Schnittstelle 114 zum Internet ist so ausgebildet, dass hierüber einerseits Benutzer ein Profil zu ihrer benutzerspezifischen Zieltelefonnummer festlegen können. Das Profil umfasst neben der Definition von Zielinformationen auch die Festlegung weiterer Parameter, die in den Unteransprüchen näher beschrieben sind. Andererseits ist die Schnittstelle 114 zum Internet so ausgelegt, dass eine Verbindung zu einem externen Telefonanbieter möglich ist, welcher die Zieltelefonnummern verwaltet und eingehende Anrufe auf Zieltelefonnummern via Internet an die PC-Anwendung 106 weiterleitet. Dazu ist in Deutschland derzeit eine sogenannte Carrier-Interconnection-Vereinbarung mit einem Telefonanbieter erforderlich.

Nachfolgend wird ein praktisches Anwendungsbeispiel eines erfindungsgemäßen Verfahrens beschrieben:
Ein Benutzer des erfindungsgemäßen Verfahrens möchte regelmäßig über Neuigkeiten aus einem bestimmten Forum informiert werden. Außerdem interessiert er sich für die Börsenkurse von zwei Unternehmen aus dem DAX 30. Dazu meldet er sich entweder über das Internet oder persönlich oder per Telefon bei einem Anbieter des erfindungsgemäßen Verfahrens an und beantragt *eine* persönliche Zieltelefonnummer für den Abruf *aller* gewünschten Zielinformationen. Anschließend kann er beispielsweise über das Internet mit Hilfe einer Benutzeroberfläche auf das Eingabemodul des erfindungsgemäßen Computerprogrammproduktes 106 zugreifen. Über das Eingabemodul gibt der Benutzer als erste Zielinformation zunächst die URL des Forums an, für das er sich interessiert. Daraufhin hat er die Möglichkeit, die Zielinformation zu präzisieren, über die er aus diesem Forum informiert werden möchte. Er kann sich beispielsweise alle neuen Forenbeiträge oder nur die Überschriften aller neuen Forenbeiträge ansagen lassen. Im vorliegenden Beispiel entscheidet er sich für die Ansage der Überschriften aller in den letzten 24 Stunden vor dem Anruf neu erstellter Forenbeiträge. Er wählt "Ansage nach Anruf" aus und gibt somit an, dass er die Zielinformation nur angesagt bekommen möchte, wenn er aktiv die Zieltelefonnummer anwählt. Die Auswahl des Benutzers wird über das Eingabemodul 112 erfasst, von diesem an das Speichermodul 110 weitergeleitet und dann auf der Festplatte 102 zu der Zieltelefonnummer gespeichert.

Als zweite Zielinformation gibt der Benutzer die URL einer Internetseite an, auf der Börsenkurse gelistet sind. Diese Seite bietet die Möglichkeit, einzelne Unternehmen auszuwählen, deren aktuelle Kurse übermittelt werden. Der Benutzer wählt die fünf ihn interessierenden DAX 30 Unternehmen aus und gibt an, dass er eine Bedingung definieren möchte, bei deren Eintreten er sofort eine Statusmeldung erhält. Er legt als Bedingung fest, dass er bei einer Kursschwankung des Kurses eines der angegebenen Unternehmen von mehr als 5% innerhalb eines Tages eine Statusmeldung erhalten möchte. Auch diese Informationen werden über das Eingabemodul 112 erfasst, von diesem an das Speichermodul 110 weitergeleitet und dann auf der Festplatte 102 zu der Zieltelefonnummer gespeichert. Weitere Zielinformationen möchte der Benutzer nicht festlegen.

Der Benutzer hat nun seine gewünschten Zielinformationen definiert. Tritt die von dem Benutzer festgelegte Bedingung ein, erhält er eine Statusmeldung und weiß, dass er sich durch Anwahl der Zieltelefonnummer seine Zielinformationen abrufen kann. Unabhängig von der Statusmeldung kann er jederzeit die Zieltelefonnummer anwählen und erhält dann die von ihm selbst festgelegten Zielinformationen, ohne dass er dazu weitere Handlungen vornehmen muss, Er kann sich auf diese Art und Weise beispielsweise sein persönlich konfiguriertes Audioprogramm für den morgendlichen Weg mit dem Auto zur Arbeit bestimmen. Um dieses abzurufen, muss er lediglich die Zieltelefonnummer anwählen und zuhören. Falls er nicht über ein Autotelefon verfügt, kann er die Zielinformation auch vor der Abfahrt über das Internet oder sein Mobiltelefon als Audiodatei abrufen und per USB-Stick oder sonstigem Datenträger auf sein Autoradio überspielen.

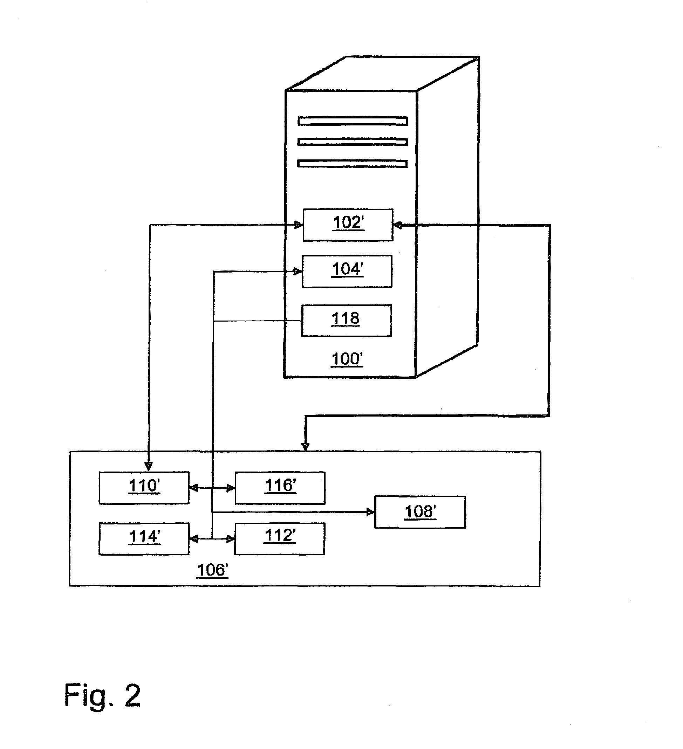

Figur 2 zeigt eine schematische Darstellung eines PCs zur Ausführung einer zweiten Ausführungsform eines erfindungsgemäßen Computerprogrammprodukts. Diese entspricht in vielen Merkmalen der ersten Ausführungsform aus Figur 1. In ihrer Funktion identische Elemente sind daher mit identischen Bezugszeichen versehen, welche in Figur 2 um ein Apostroph (') ergänzt sind. Das Wiedergabemodul 108' ist bei dieser Ausführungsform in die PC-Anwendung 106 integriert. Dieser Unterschied ist jedoch nicht wesentlich, da die in Figur 2 dargestellte Variante ebenfalls mit einem externen Wiedergabemodul und einer Schnittstelle zu diesem funktionieren (vgl. Figur 1) würde.

Wichtiger ist, dass der PC 100' eine Anschlusskarte für ein Telefonnetz 118 (z.B. ein Modern oder eine ISDN-Karte) aufweist und somit die Möglichkeit besteht, den PC 100' selbst ans Telefonnetz anzuschließen. Diese Möglichkeit eröffnet es Privatbenutzern oder Inhabern von mehreren Telefonnummern, sich selbst Zieltelefonnummern anzumieten oder bereits vorhandene und nicht genutzte Telefonnummern für die Verwendung des erfindungsgemäßen Verfahrens bzw. des erfindungsgemäßen Computerprogrammprodukts einzusetzen. Beispielsweise kann ein Endverbraucher, der über einen wie in Figur 2 dargestellten PC verfügt, darauf ein Computerprogrammprodukt 106' installieren und dann auf seinem PC 106' die Zielinformation sowie ggf. weitere Parameter speichern. Bei Anwahl seiner Zieltelefonnummern, die in diesem Fall seine eigene ist, würde dann der PC 106' mit Hilfe des installierten Computerprogrammprodukts 106' alle Schritte durchführen, die vorher bereits im Zusammenhang mit Figur 1 beschrieben wurden. Es ist daher für die Erfindung nicht zwingend erforderlich, sich eine Nummer bei einem Provider zu beschaffen.

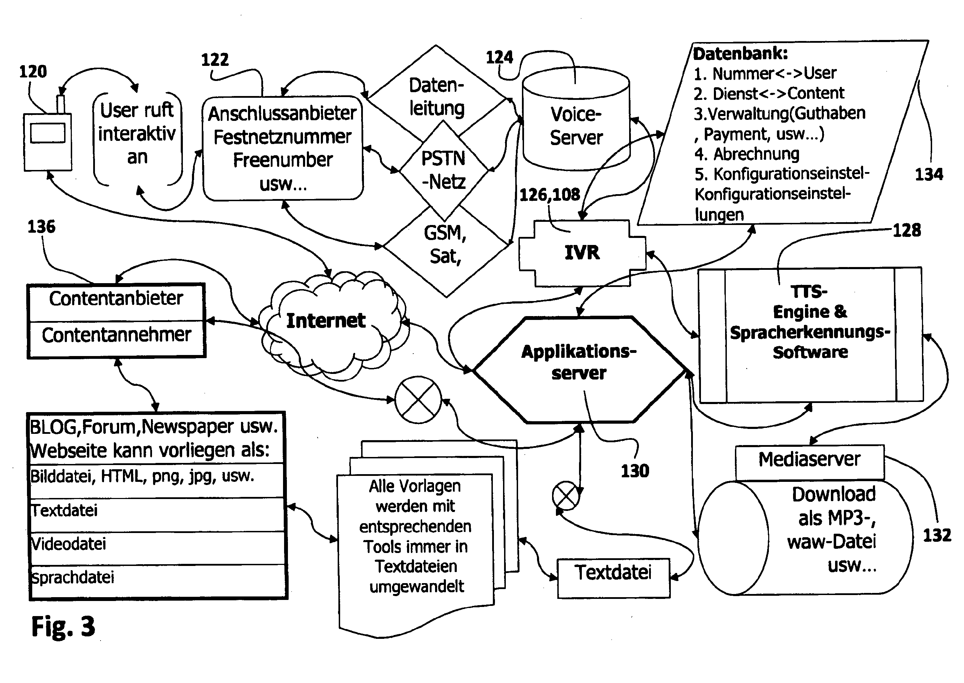

Figur 3 zeigt eine schematische Darstellung einer praktischen Ausführungsform des erfindungsgemäßen Verfahrens einschließlich dazu eingesetzter Hard- und Software. Elemente, die denen aus den Figuren 1 und 2 entsprechen, sind in Figur 3 mit entsprechenden Bezugszeichen versehen.

Ein Benutzer (User) ruft mit einem Festnetz- oder Mobiltelefon 120 die von einem Anschlussanbieter 122 vergebene Telefonnummer an. Die Telefonnummer kann eine Festnetznummer, Mobiltelefonnummer, Webnummer, "Freenumber" (0800er-Nummer), 0700er-Nummer, Premiumnummer oder sonstige Nummer sein. In dem gezeigten Beispiel besteht eine Interconnection-Vereinbarung zwischen dem Anschlussanbieter 122 und einem Telefonanbieter, der über eine Datenleitung, klassische Telefonleitung (PSTN-Netz) und/oder ein mobiles Netz, wie z.B. GSM, Satellit etc., mit dem Anschlussanbieter 122 verbunden ist. Der Telefonanbieter verfügt in dem in Figur 3 gezeigten Beispiel über einen Voice-Server 124 sowie über weitere Hard- und Softwarekomponenten, die miteinander in Verbindung stehen und nachfolgend noch näher erläutert werden. Der Voice-Server 124 nimmt eingehende Anrufe an. Er ist ferner mit einem Interactive Voice Response System (IVR) 126 verbunden. Das IVR 126 ist ein Sprachdialogsystem, weiches insbesondere in einer in diesem enthaltenen Datenbank gespeicherte Ansagen an den Benutzer ausgeben kann. Es ermöglicht darüber hinaus, dass mit diesem verbundene Benutzer, z.B. per Sprache oder per Eingabe über die Telefontastatur, Eingaben machen können, die von dem IVR erkannt und weiterverarbeitet werden. Darüber hinaus ist das IVR 126 gleichzeitig eine Wiedergabeeinheit 108 im Sinne der Erfindung, denn sie ist auch dazu imstande, von einer Text-to-Speech-Engine (TTS-Engine) 128 erzeugte Sprache wiederzugeben.

Die Weiterverarbeitung von Eingaben des Benutzers erfolgt insbesondere über eine auf einem Applikationsserver 130 laufende, in Figur 3 nicht dargestellte PC-Anwendung 106. Die PC-Anwendung weist eine Datenbank 134 auf oder ist zumindest mit dieser verknüpft.

In der Praxis könnte der Benutzer beispielsweise durch das IVR 126 mit der Ansage "Willkommen bei unserem Service" begrüßt werden und anschließend folgende Optionen angeboten bekommen: "Wählen Sie die 1 für die Wiedergabe von auswählbaren Internetseiten oder warten Sie einfach ab für die Wiedergabe von den von Ihnen vorkonfigurierten lnternetseiten". Der Benutzer kann sich dann entscheiden, ob er manuell auswählen möchte., weiche Informationen aus dem Internet ihn interessieren oder ob er bereits von ihm selbst konfigurierte Informationen hören möchte. Die Variante "Abwarten für die Wiedergabe von vorkonfigurierten Internetseiten" steht nur zur Verfügung, wenn für den Benutzer bereits ein Benutzerkonto in einer mit dem Applikationsserver verbundenen Datenbank existiert und der Benutzer entsprechende Konfigurationen vorgenommen hat. Ferner muss der Benutzer, beispielsweise aufgrund der Telefonnummer oder aufgrund eines vorherigen Logins mittels eines Benutzernamens und/oder eines Passworts, von dem Applikationsserver erkannt worden sein.

Wählt der Benutzer die 1, erkennt der Applikationsserver 130 dies und veranlasst, dass das IVR dem Benutzer weitere Auswahimöglichkeiten zur Verfügung stellt, z.B. 1 für Süddeutsche, 2 für Bild, 3 für Express oder 4 für Blogs und Internetforen. Hat der Benutzer sich für eine Auswahl entschieden und diese z.B. über die Telefontastatur oder per Sprachwahl getroffen, erkennt der Applikationsserver 130 diese und greift über eine direkte Verbindung (z.B. eine VPN-Verbindung oder einen http-request) oder über das Internet auf die entsprechende Internetseite eines ausgewählten Contentanbieters 136 zu. Bei direkter Verbindung wird der Internetinhalt (Content) von dem Contentanbieter direkt an den Applikationsserver 130 übergeben. Der Applikationsserver 130 leitet den Content, bei dem es sich regelmäßig um Textdateien handelt, an die TTS-Engine weiter, weiche den Text in Sprache umwandelt. Die Sprache wird dann entweder über einen Zwischenspeicher an den IVR übergeben und dem Benutzer direkt vorgelesen. Oder sie wird in eine speicherbare Audiodatei umgewandelt und auf einem Mediaserver 132 zum Download abgelegt. Die Audiodatei kann dann jederzeit später über den Applikationsserver 130 abgerufen und z.B. per E-Mail an den Benutzer verschickt werden.

Wählt der Benutzer keine Zahl, wird ein Inhalt wiedergegeben, der vom Benutzer in der bereits beschriebenen Weise vorkonfiguriert und in der Datenbank 134 zu einem Profil gespeichert wurde. Wie in Fig. 3 angedeutet, können in der Datenbank 134 auch finanzielle Daten zu jedem Benutzer gespeichert werde. Beispielsweise kann ein Abrechnungssystem integriert sein, dass das Abrufen von Audiodateien bestimmter Internetinhalte erfasst und dem Benutzer in Rechnung stellt.

Sollen Inhalte akustisch wiedergegeben werden, die nicht als Textdatei, sondern als Bilddatei, HTML-Datei, PNG-Datei, JPG-Datei, Videodatei, Sprachdatei oder sonstige Datei zur Verfügung stehen, können diese Dateiformate zunächst mit Hilfe von Tools, insbesondere OCR-Software, in Textdateien umgewandelt werden. Diese Textdateien können dann - wie zuvor beschrieben --- in Sprache umgewandelt und ausgegeben oder als Audiodatei auf dem Mediaserver 132 gespeichert werden.

Die Erfindung ermöglicht es auch, Internetinhalte per Sprache einzugeben. Dazu ist es allerdings erforderlich, dass der betreiber der entsprechenden Internetseite ein sogenannter Contentannehmer 136 ist und eine direkte Verbindung zwischen dem Applikationsserver 130 und dem Contentannehmer 136 besteht. In diesem Fall können per Sprache neue Foreneinträge erstellt werden. Dazu kann einem Benutzer beispielsweise nach dem Anhören der Überschriften oder Artikel von Foren die Möglichkeit gegeben werden, einen Artikel per Sprache zu erstellen, z.B. durch die Ansage "Drücken Sie die 1, um einen neuen Artikel zu erstellen". Anschließend wird der Benutzer dazu aufgefordert, den Text seines Artikels zu sprechen, z.B. durch die Ansage "Geben Sie jetzt den Artikelinhalt wieder und beenden Sie Ihre Eingabe durch Drücken der 1". Die nachfolgend von dem Benutzer artikulierten Worte werden von der Spracherkennungssoftware 128 in eine Text umgewandelt, an den Applikationsserver 130 übergeben und von diesem an den Contentannehmer 136 übermittelt. Um etwaige Fehler bei der Umwandlung von Text in Sprache ausschließen zu können, kann die Spracherkennungssoftware 128 zusätzlich zu der erzeugten Textdatei die Audiodatei mit der Aufzeichnung der Sprache an den Applikationsserver übermitteln. Der Applikationsserver kann dann - sofern der Benutzer einer solchen Übermittlung zustimmt - die Audiodatei zusätzlich zur Textdatei an den Contentannehmer übermittelt, so dass in dem Internetforum der neue Artikel zum einen als Text erscheint und darüber hinaus als Audiodatei zur Verfügung steht, um sich die Originalaufnahme noch einmal anhören zu können und die Umsetzung in Text überprüfen zu können.

### Bezugszetchenliste

- 100: PC
- 102: Festplatte
- 104: Netzwerkkarte
- 106: PC-Anwendung / Computerprogrammprodukt
- 108: Wiedergabeeinheit
- 110: Speichermodul
- 112: Eingabemodul
- 114: Schnittstelle zum Internet
- 116: Schnittstelle zu Wiedergabeeinheit
- 118: Anschlusskarte für ein Telefonnetz
- 120: Telefon
- 122: Anschlussanbieter
- 124: Voice-Server
- 126: Interactive Voice Response System (IVR)
- 128: Text-to-Speech-Engine (TTS-Engine) / Spracherkennungssoftware
- 130: Applikalionsserver
- 132: Mediaserver
- 134: Datenbank
- 136: Contentanbieter / Contentannehmer

## Patentansprüche

1. Verfahren zur automatisierten konfigurierbaren akustischen Wiedergabe von über das Internet zugänglichen Textquellen, umfassend folgende Schritte:
a) Speicherung einer persönlichen Zieltelefonnummer zu einem Benutzer in einer mit dem Internet verbundenen PC-Anwendung (106),
b) Auswahl mindestens einer über eine URL verfügbare, individuell festlegbare Zielinformation durch den Benutzer und Speicherung der URL und der Zielinformation zu der persönlichen Zieltelefonnummer in der Anwendung,
c) Anwahl der Zieltelefonnummer und anschließende akustische Wiedergabe der Zielinformation aus der Anwendung durch eine Wiedergabeeinheit (108) zur akustischen Wiedergabe von Sprache, **dadurch gekennzeichnet**,
d) das der Benutzer die Zielinformation betreffende Bedingungen definiert, deren Eintreten einen automatisch von der PC-Anwendung (106) ausgelösten Anruf zur akustischen Wiedergabe der Zielinformation initiiert oder eine wobei die PC-Anwendung eine Statusmeldung an den Benutzer übermittelt verbunden mit der Möglichkeit für den Benutzer, eine Anwahl der Zieltelefonnummer zu initiieren.

2. Verfahren nach Anspruch 1, **dadurch gekennzeichnet, dass** die durch die PC-Anwendung (106) einer persönlichen Zieltelefonnummer zugeordneten Zielinformationen durch die PC-Anwendung (106) zwischengespeichert und zu vordefinierten oder vom Benutzer definierbaren Zeitpunkten mit den über die URL abrufbaren Zielinformationen aktualisiert werden.

3. Verfahren nach einem der vorstehenden Ansprüche, **dadurch gekennzeichnet, dass** der Benutzer zu seiner persönlichen Zieltelefon-nummer ein Kennwort vergibt, welches durch die PC-Anwendung (106) zu der Zieltelefonnummer gespeichert wird, und dass die akustische Wiedergabe der Zielinformation zu einer Zieltelefonnummer erst nach einer Eingabe des durch die PC-Anwendung (106) zu der Zieltelefonnummer gespeicherten Kennworts durch den Benutzer erfolgt.

4. Verfahren nach einem der vorstehenden Ansprüche, **dadurch gekennzeichnet, dass** zur Bestimmung von einer Zieltelefonnummer zugeordneten Zielinformationen eine graphische Benutzeroberfläche verwendet wird, mittels welcher nach Eingabe einer URL eine Struktur der über die URL abrufbaren Informationen angegeben wird oder die Struktur der über die URL abrufbaren Informationen analysiert und anschließend entweder in abstrakter Form oder graphisch gliedert auswählbar dargestellt wird.

5. Verfahren nach einem der vorstehenden Ansprüche, **dadurch gekennzeichnet, dass** die einer persönlichen Zieltelefonnummer zugeordneten Zielinformationen durch den Benutzer durch die Angabe weiterer, insbesondere zeitlich definierter Parameter präzisiert und diese Parameter ebenfalls zu der Zieltelefonnummer durch die PC-Anwendung (106) gespeichert werden.

6. Verfahren nach einem der vorstehenden Ansprüche, **dadurch gekennzeichnet, dass** die PC-Anwendung (106) die Zielinformation in eine Audiodatei umwandelt und anschließend an den Benutzer übermittelt und/oder speichert.

## Claims

1. Method for the automated configurable acoustic reproduction of text sources accessible via the Internet, comprising the following steps:
a) storing a personal destination telephone number for a user in a PC application (106) connected to the Internet,
b) selecting at least one piece of target information which is available via a URL and can be individually defined by the user and storing the URL and target information for the personal destination telephone number in the application,
c) dialling the destination telephone number and subsequent acoustic reproduction of the target information from the application by a reproduction unit (108) for acoustic reproduction of language, **characterised in that**
d) the user defines conditions relating to the target information, the occurrence of which initiates a call automatically triggered by the PC application (106) for acoustic reproduction of the target information or wherein the PC application transmits a status report to the user combined with the possibility for the user of initiating a dialling of the destination telephone number.

2. Method according to Claim 1, **characterised in that** the target information assigned by the PC application (106) to a personal destination telephone number are buffered by the PC application (106) and are updated with target information which can be retrieved via the URL at predefined times or times defined by the user.

3. Method according to any one of the preceding claims, **characterised in that** the user assigns a password to his or her personal destination telephone number, which password is stored by the PC application (106) for the destination telephone number, and that the acoustic reproduction of the target information to a destination telephone number is only carried out after an input by the user of the password stored by the PC application (106) for the destination telephone number.

4. Method according to any one of the preceding claims, **characterised in that** a graphic user interface is used to determine target information assigned to a destination telephone number, by means of which graphic user interface a structure of the information which can be retrieved via the URL is indicated after input of a URL or the structure of the information which can be retrieved via the URL is analysed and subsequently represented either in an abstract form or selectably in a graphically arranged manner.

5. Method according to any one of the preceding claims, **characterised in that** the target information assigned to a personal destination telephone number are specified by the user by indicating further, in particular chronologically defined parameters and these parameters are also stored by the PC application (106) for the destination telephone number.

6. Method according to any one of the preceding claims, **characterised in that** the PC application (106) converts the target information into an audio file and subsequently transmits it to the user and/or stores it.

## Revendications

1. Procédé pour la reproduction acoustique, configurable de manière automatisée, de sources textuelles accessibles via Internet, comprenant les étapes suivantes :
a) mémorisation d'un numéro de téléphone cible personnel d'un utilisateur dans une application PC raccordée à Internet (106)
b) sélection par l'utilisateur d'au moins une information cible définissable individuelle disponible par l'intermédiaire d'une URL, et mémorisation de l'URL et de l'information cible relative au numéro de téléphone cible personnel dans l'application,
c) composition du numéro de téléphone cible, puis reproduction acoustique de l'information cible à partir de l'application par l'intermédiaire d'une unité de reproduction (108) pour une reproduction acoustique de la parole, **caractérisé en ce que**
d) l'utilisateur définit les conditions concernant l'information cible, dont la survenance d'un appel automatique déclenché par l'application PC (106) pour initier la reproduction acoustique de l'information cible, ou une condition telle que l'application PC transmet un message d'état à l'utilisateur, allant de pair avec la possibilité pour l'utilisateur d'initier une sélection du numéro de téléphone cible.

2. Procédé selon la revendication 1, **caractérisé en ce que** les informations cibles associées à un numéro de téléphone cible personnel par l'application PC (106) sont mémorisées par l'application PC (106), et mises à jour à des moments prédéfinis ou définis par l'utilisateur avec des informations cibles consultables par l'intermédiaire de l'URL.

3. Procédé selon l'une quelconque des revendications précédentes, **caractérisé en ce que** l'utilisateur attribue un mot de passe à son numéro de téléphone cible personnel qui est mémorisé par l'application PC (106) pour le numéro de téléphone cible, et **en ce que** la reproduction acoustique de l'information cible pour un numéro de téléphone cible survient après que l'utilisateur ait entré le mot de passe mémorisé par l'application PC (106) pour le numéro de téléphone cible.

4. Procédé selon l'une quelconque des revendications précédentes, **caractérisé en ce que** pour la détermination d'informations cibles concernant un numéro de téléphone cible, une interface d'utilisateur graphique est utilisée, par l' intermédiaire de laquelle, après l'entrée d'une URL, une structure des informations consultables par l'intermédiaire de l'URL va être spécifiée, ou la structure des informations consultables par l'intermédiaire de l'URL va être analysée, et ensuite affichée en pouvant choisir entre une forme abstraite ou une organisation graphique.

5. Procédé selon l'une quelconque des revendications précédentes, **caractérisé en ce que** les informations cibles associées à un numéro de téléphone cible personnel par l'utilisateur sont précisées en indiquant un paramètre en particulier défini dans le temps, et ce paramètre va être également mémorisé pour le numéro de téléphone cible par l'application PC (106).

6. Procédé selon l'une quelconque des revendications précédentes, **caractérisé en ce que** l'application PC (106) convertit l'information cible en un fichier audio, puis l'envoie à l'utilisateur et/ou le mémorise.
